# EUROPÄISCHE PATENTSCHRIFT

(11) **EP 1 776 535 B1**
(45) Veröffentlichungstag und Bekanntmachung des Hinweises auf die Patenterteilung: **28.04.2010**
(21) Anmeldenummer: 05769665.0
(22) Anmeldetag: 02.08.2005
(51) Int. Cl.: F16H 25/22, B62D 5/04, F16H 25/24

(54) **KUGELGEWINDETRIEB**
BALL SCREW
VIS D'ENTRAINEMENT A BILLES

(30) Priorität: 11.08.2004 DE 102004038951
(43) Veröffentlichungstag der Anmeldung: 25.04.2007
(73) Patentinhaber: Schaeffler KG, 91074 Herzogenaurach (DE)
(72) Erfinder: OSTERLÄNGER, Jürgen, 91448 Emskirchen (DE); ADLER, Dieter, 91074 Herzogenaurach (DE); KRAUS, Manfred, 91074 Herzogenaurach (DE); MAYER, Ralf, 91074 Herzogenaurach (DE)
(86) Internationale Anmeldenummer: PCT/EP2005/008336
(87) Internationale Veröffentlichungsnummer: WO 2006/018124

(56) Entgegenhaltungen:
- EP-A- 0 133 003
- EP-A- 1 258 643
- EP-A- 1 270 370
- DE-A1- 10 258 826
- DE-B- 1 294 131
- FR-A- 2 191 677
- GB-A- 559 407
- US-A- 5 809 838
- US-B1- 6 220 110
- US-B1- 6 691 837
- PATENT ABSTRACTS OF JAPAN Bd. 016, Nr. 290 (M-1272), 26. Juni 1992 (1992-06-26) & JP 04 078358 A (FANUC LTD), 12. März 1992 (1992-03-12)

## Beschreibung

### Gebiet der Erfindung

Die vorliegende Erfindung betrifft einen Kugelgewindetrieb. Kugelgewindetriebe zählen zu den Rot-Trans-Getrieben, bei denen eine Drehbewegung in eine lineare Bewegung umgewandelt werden kann entsprechend dem Oberbegriff des Anspruche 1 und wie es aus der US6691837A bekannt ist. Derartige Kugelgewindetriebe finden zunehmend Anwendung im Kfz-Bereich, beispielsweise in elektromechanischen Lenkunterstützungen.

Aus DE 102 58 826 A1 beispielsweise ist eine Antriebseinrichtung mit einem Wälzkörpergewindetrieb bekannt geworden, die als elektromechanische Lenkunterstützung bei einer Zahnstangenlenkung in Kraftfahrzeugen zum Einsatz kommen kann. Ein hohler Rotor ist mittels einer Wälzlagerung in einem Gehäuse drehbar gelagert, wobei der Rotor mit einer Spindelmutter antriebsmäßig verbunden ist. Der Rotor treibt eine Gewindespindel des Wälzkörpergewindetriebes an. Die Spindelmutter ist innerhalb des Gehäuses angeordnet. Bei dem hier offenbarten Kugelgewindetrieb wälzen die Kugeln an Kugelrillen der Spindelmutter und der Kugelrollspindel ab. Dieser Kugelgewindetrieb ist mit einer einmaligen Befettung ausgerüstet, um eine einwandfreie Schmierung zu gewährleisten. Ein Nachschmieren des Kugelgewindetriebes ist aufwendig, da für einen externen Zugang das Gehäuse geöffnet werden muss. Bei der Befettung eines derartigen Kugelgewindetriebes ist zusätzlich zu berücksichtigen, dass die Spindelmutter rotiert; ein Aufsetzen eines Schmierstoffbehälters auf die Spindelmutter, so dass Schmiermittel aus dem Schmierstoffbehälter heraus und in den Kugelkanal des Wälzkörpergewindetriebes einsickern kann, ist somit ausgeschlossen.

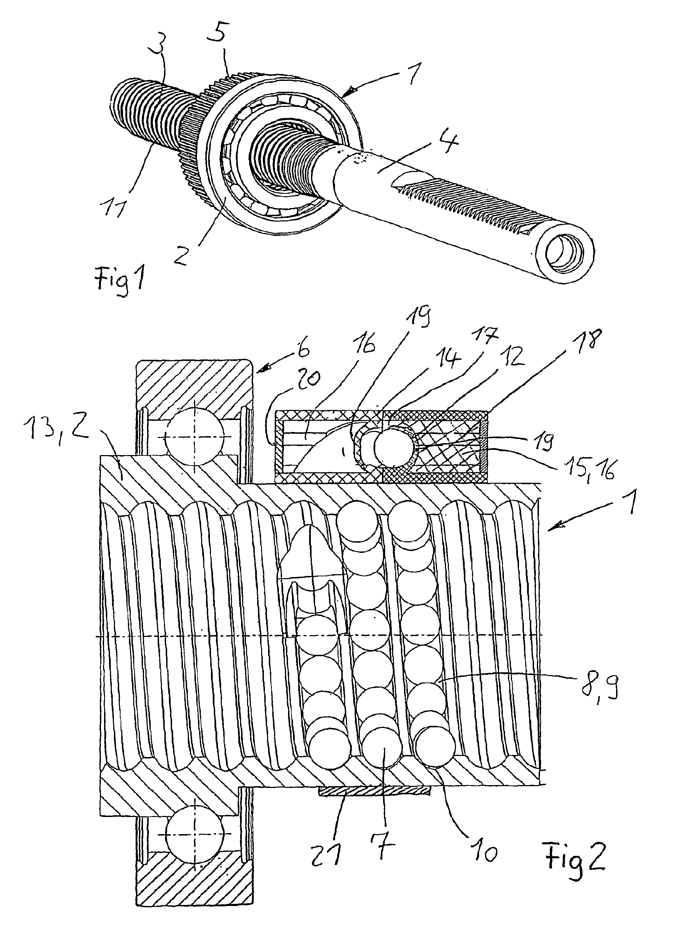

Aus US 6,691,831 B1 ist ein Kugelgewindetrieb bekannt geworden, bei dem die Kugelrollspindel 3 mit einer koaxialen Bohrung 15 versehen, wobei eine ein Schmierstoffdepot 9 bildende Hülse 12 in diese Bohrung 15 eingesetzt ist. An ihrem einen axialen Ende ist die Hülse aus der Bohrung herausgeführt und mit einem umgebördelten Flansch 33 versehen, der am Innenumfang der Spindelmutter angebunden ist. Zwischen der Hülse 12 und der Wandung der Bohrung 15 der Kugelrollspindel 2 ein Ringspalt angeordnet, wobei in Figur 2 deutlich zu erkennen ist, dass das Öl durch Bohrungen 11 zu dem Kugelkanal 4,5 fließen kann. Demzufolge ist das Schmierstoffdepot radial innerhalb der Gewindespindel angeordnet.

Aufgabe der vorliegenden Erfindung konnte es daher gewesen sein, einen Kugelgewindetrieb nach den Merkmalen des Oberbegriffs des Anspruchs 1 anzugeben, der einfach herzustellen ist.

Erfindungsgemäß wurde diese Aufgabe durch den Gegenstand gemäß Anspruch 1 gelöst.

Mit der Erfindung wird demzufolge eine Einrichtung vorgeschlagen, bei der für eine einwandfreie Schmierung weder die Gewichtskraft noch eine Kapillarwirkung zur Schmierstoffabgabe erforderlich ist. Die Kapillarwirkung bei der Abgabe von Schmierstoff wird oftmals genutzt bei Kugelgewindetrieben mit stillstehender Spindelmutter.

Erfindungsgemäß umfasst die Nachschmiereinrichtung ein Schmierstoffdepot und einen den Kugelkanal an das Schmierstoffdepot anschließenden Übergabebereich, wobei das Schmierstoffdepot zumindest im wesentlichen radial innerhalb des Übergabebereichs angeordnet ist, und wobei das Schmierstoffdepot radial außerhalb der Kugelrollspindel angeordnet ist. Bei dieser Anordnung ist sichergestellt, dass Schmierstoff aus dem Schmierstoffdepot vollständig unter Einwirkung der Fliehkraft nach radial außen auf den Übergabebereich gepresst wird und von dort an den Kugelkanal abgegeben wird. Im Übergabebereich kann beispielsweise eine Drossel vorgesehen werden, um drehzahlabhängig den Durchfluss von Schmierstoff zu regulieren. Die Anordnung des Schmierstoffdepots radial innerhalb der Übergabestelle ermöglicht eine Vielzahl von Möglichkeiten für die Lage und Anordnung des Schmierstoffdepots; Denn, wie bereits erwähnt wurde, braucht diese Anordnung nicht länger unter Berücksichtigung eines Kapillareffektes oder der Gewichtskraft zu erfolgen.

Der Schmierstoff kann in einem porösen Stoff gelagert sein. Ein derartiger Stoff kann beispielsweise durch einen Filz gebildet sein. Dieser Filz kann auch im Übergabebereich angeordnet sein.

Der endlose Kugelkanal weist einen um die Kugelrollspindel gewundenen, von den Kugelrillen der Kugelrollspindel und der Spindelmutter begrenzten Lastabschnitt auf. Dessen Anfang und Ende sind durch einen lastfreien Rückführungsabschnitt endlos miteinander verbunden. Bei einer bevorzugten erfindungsgemäßen Weiterbildung weist der Rückführungsabschnitt den Übergabebereich auf, so dass die Zuführung von Schmiermittel im Bereich des lastfreien Rückführungsabschnittes erfolgen kann.

Bei Kugelgewindetrieben mit einer sogenannten Außenumlenkung kann sich der Lastabschnitt über mehrere Windungen erstrecken. In diesem Fall ist es denkbar, dass lediglich ein Rückführungsabschnitt für diesen Kugelgewindetrieb vorgesehen ist. In diesem Fall empfiehlt es sich eine Einrichtung zum Ausgleichen einer Unwucht vorzusehen.

Bei Kugelgewindetrieben spielt oftmals die sogenannte Durchschiebekraft der Kugeln durch den Kugelkanal eine wichtige Rolle. Diese Durchschiebekraft der Kugeln durch den Kugelkanal ist maßgeblich beeinflusst durch die Länge der endlosen Kette von Kugeln. Wenn beispielsweise zwei Rückführungsabschnitte vorgesehen sind, also zwei endlose Kugelkanäle angeordnet sind, halbiert sich in diesem Fall die Länge der Kette von Kugeln. In diesem Fall ist es besonders günstig, wenn die Rückführungabschnitte derart am Umfang der Spindelmutter verteilt angeordnet sind, dass die Unwuchten ausgeglichen sind. Es ist davon auszugehen, dass die Abgabe von Schmierstoff aus beiden Schmierstoffdepots gleichmäßig erfolgt. Auf diese Weise sind Unwuchten auch dann ausgeschlossen, wenn die Schmierstoffdepots weitgehend entleert sind.

Insbesondere bei der Massenfertigung kommt das Spritzgießen von Bauteilen zur Anwendung. Eine bevorzugte erfindungsgemäße Weiterbildung sieht eine Kassette vor, bei der der Rückführungsabschnitt und das Schmierstoffdepot integriert sind, wobei eine den Rückführungsabschnitt begrenzende Wand den Umlenkkanal von dem Schmierstoffdepot trennt. Derartige Körper lassen sich problemlos im Spritzgießverfahren herstellen. Da hier Hohlräume vorzusehen sind, bietet sich an, die Kassette als mehrteiliges Bauelement auszuführen, wobei angestrebt ist, möglichst baugleiche Teile zu schaffen, die zu einem Ganzen lediglich zusammengefügt zu werden brauchen.

Die Spindelmutter weist vorzugsweise ein auf die Kugelrollspindel aufgesetztes Mutterteil auf, an dessen Innenumfang die Kugelrillen des Kugelkanals ausgebildet sind, wobei in diesem Fall die Kassette an das Mutterteil angeschlossen ist, beispielsweise von radial außen auf das Mutterteil aufgesteckt ist.

Die den Rückführungsabschnitt begrenzende Wand kann vorzugsweise mit dem Übergabebereich versehen sein, der das Schmierstoffdepot mit dem endlosen Kugelkanal verbindet.

Die vorliegende Erfindung ist insbesondere für elektromechanisch unterstützte Zahnstangenlenkungen eines Kraftfahrzeugs geeignet, die mit dem oben beschriebenen erfindungsgemäßen Kugelgewindetrieb versehen sind. Bei einer derartigen Zahnstangenlenkung weist eine Zahnstange in axialer Verlängerung die Kugelrollspindel auf, wobei die in einem Gehäuse drehbar gelagerte Spindelmutter mit einem Antriebsritzel für einen Zahnriemen versehen ist. Das Schmierstoffdepot ist in diesem Fall so groß dimensioniert, dass der Kugelgewindetrieb lebensdauergeschmiert ist. Ein Austauschen des Kugelgewindetriebes kann demzufolge unterbleiben. Es brauchen demzufolge keine Wartungsintervalle eingehalten zu werden.

Nachstehend wird die Erfindung anhand eines in insgesamt sechs Figuren abgebildeten Ausführungsbeispieles näher erläutert. Es zeigen:
- Figur 1: eine Zahnstangenlenkung mit einem erfindungsgemäßen Kugelgewindetrieb in perspektivischer Darstellung;
- Figur 2: den erfindungsgemäßen Kugelgewindetrieb aus Figur 1 im Längsschnitt und
- Figuren 3 bis 6: ein Einzelteil des erfindungsgemäßen Kugelgewindetriebes aus Figur 2 in verschiedenen perspektivischen Darstellungen.

Figur 1 zeigt in perspektivischer Darstellung wesentliche Teile einer Hilfskraft unterstützten Zahnstangenlenkung eines Kraftfahrzeuges. Ein Kugelgewindetrieb 1 weist eine Spindelmutter 2 auf, die drehbar auf einer Kugelrollspindel 3 angeordnet ist. Die Kugelrollspindel 3 ist in axialer Verlängerung einer Zahnstange schier ausgebildet. Der Figur 1 ist ferner zu entnehmen, dass die Spindelmutter 2 mit einem Antriebsritzel 5 für einen hier nicht dargestellten Zahnriemen versehen ist. Dieses Antriebsritzel 5 ist drehfest mit der Spindelmutter 2 verbunden.

Die Spindelmutter ist hier in einem nicht weiter abgebildeten Gehäuse eingebaut.

Figur 2 zeigt in vergrößerter Darstellung einen Längsschnitt durch den Kugelgewindetrieb 1. Die Spindelmutter 2 ist über ein Rillenkugellager 6 in dem hier nicht abgebildeten Gehäuse drehbar gelagert. Kugeln 7 sind in einem endlosen Kugelkanal 8 endlos umlauffähig angeordnet. Dieser endlose Kugelkanal 8 weist einen Lastabschnitt 9 auf, der von Kugelrillen 10, 11 der Spindelmutter 2 und der Kugelrollspindel 3 begrenzt ist. Anfang und Ende dieses Lastabschnitts 9 sind von einem lastfreien Rückführungsabschnitt 12 endlos miteinander verbunden. Die Kugeln 7 durchlaufen diesen Rückführungsabschnitt 12 lastfrei und treten nach dessen Durchlauf wieder in den Anfang des Lastabschnittes 9 ein.

Die Spindelmutter 2 weist ein Mutterteil 13 auf, das mit der Kugelrille 10 versehen ist. Ferner weist diese Spindelmutter 2 eine Kassette 14 auf, die mit dem

Rückführungsabschnitt 12 versehen ist. Diese Kassette 14 umfasst ferner eine Nachschmiereinrichtung 15, um den Kugelgewindetrieb mit Schmierstoff ausreichend zu versorgen.

Diese Nachschmiereinrichtung 15 nutzt die auf die rotierende Spindelmutter 2 einwirkende Fliehkraft, unter der Schmierstoff an den Kugelkanal 8 abgegeben wird.

Die Nachschmiereinrichtung 15 umfasst ein Schmierstoffdepot 16 und einen Übergabebereich 17, der das Schmierstoffdepot 16 an den endlosen Kugelkanal 8 anschließt. Das Schmierstoffdepot 16 ist radial innerhalb des Übergabebereichs 17 angeordnet. Auf diese Weise ist sichergestellt, dass der Schmierstoff aus dem Schmierstoffdepot 16 unter Einwirkung der Fliehkraft durch den Übergabebereich 17 hindurch in den endlosen Kugelkanal 8 hineingefördert wird.

Der Figur 2 ist zu entnehmen, dass der Übergabebereich etwa als Kanal ausgebildet ist. In das Schmierstoffdepot 16 ist ein poröser Stoff 18 eingesetzt, in dem der Schmierstoff eingelagert ist. Dieser poröse Stoff kann beispielsweise durch einen Filz gebildet sein. Auf diesen Stoff kann gegebenenfalls verzichtet werden, ohne dass die Erfindung beeinträchtigt ist.

Der Figur 2 ist zu entnehmen, dass die Kassette 14 aus zwei Teilen zusammengesetzt ist. Diese beiden Teile sind vorzugsweise baugleich. Beide Teile sind mit einem Schmierstoffdepot 16 versehen. Es ist aber auch denkbar, dass auch nur eines der beiden Teile mit dem Schmierstoffdepot 16 versehen ist. Ferner kann der poröse Stoff 18 auch oder nur im Übergabebereich 17 angeordnet sein. Figur 2 zeigt ferner, dass eine den Rückführungsabschnitt 12 begrenzende Wand 19 den Rückführungsabschnitt 12 von dem Schmierstoffdepot 16 trennt. In günstiger Weise kann diese Kassette 14 im Spritzverfahren aus Kunststoff hergestellt werden, wobei die Kassette 17 in axialen Richtungen jeweils mit einem Deckel 20 versehen ist, der das Schmierstoffdepot 16 verschließt.

Figur 2 zeigt ferner eine Einrichtung zum Ausgleichen einer Unwucht, die vorliegend durch eine am Außenumfang des Mutterteils 13 befestigtes Masseteil 21 gebildet ist. Anstelle dieses Masseteils 21 kann bei erfindungsgemäßen Kugelgewindetrieben mit mehreren endlosen Kugelumläufen die Kassetten dieser endlosen Kugelkanäle derart am Umfang des Mutternteils 13 angeordnet werden, dass Unwuchten bei der erfindungsgemäßen Spindelmutter vermieden sind.

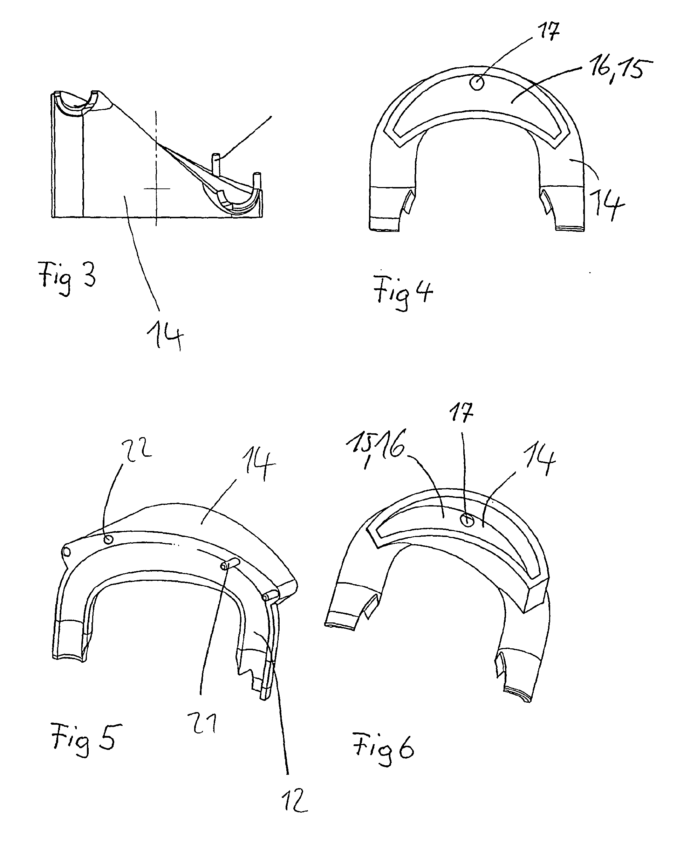

In den Figuren 3 bis 6 ist eines der Teile der Kassette 14 abgebildet. Die Kassette 17 ist gekrümmt und an die Außenkontur des Mutterteils 13 angepasst. Figur 6 zeigt deutlich die Ausbildung des Schmierstoffdepots 16. Ferner sind Zapfen 21 und Zapfenlöcher 22 zu erkennen, wobei die Zapfen 21 des einen Teils in die Zapfenlöcher 22 des anderen Teils eingreifen, um die beiden Teile der Kassette 14 positionsgerecht miteinander zu verbinden. Figur 5 zeigt besonders deutlich die Ausbildung des Rückführungsabschnitts 12, in dem die Kugeln 7 vom Ende zum Anfang des Lastabschnitts 9 rückgeführt werden.

Figur 4 zeigt deutlich, dass der Übergabebereich 17 an der radial äußersten Stelle des Schmierstoffdepots 16 angeordnet ist. Die radial äußere Wand des Schmierstoffdepots 16 ist in den Umfangsrichtungen gesehen derart gekrümmt, dass der Schmierstoff unter der Einwirkung von Fliehkraft der rotierenden Spindelmutter 2 in Richtung auf den Übergabebereich 17 gedrängt wird.

### Bezugszahlenliste

- 1: Kugelgewindetrieb
- 2: Spindelmutter
- 3: Kugelrollspindel
- 4: Zahnstange
- 5: Antriebsritzel
- 6: Rillenkugellager
- 7: Kugel
- 8: Kugelkanal
- 9: Lastabschnitt
- 10: Kugelrille
- 11: Kugelrille
- 12: Rückführungsabschnitt
- 13: Mutterteil
- 14: Kassette
- 15: Nachschmiereinrichtung
- 16: Schmierstoffdepot
- 17: Übergabebereich
- 18: poröser Stoff
- 19: Wand
- 20: Deckel
- 21: Masseteil

## Patentansprüche

1. Kugelgewindetrieb (1) , mit einer Kugelrollspindel (3), und einer darauf angeordneten drehbar angetriebenen Spindelmutter (2) , wobei Kugeln (7) in wenigstens einem endlosen Kugelkanal (8) endlos umlauffähig angeordnet sind, welcher Kugelkanal (8) einen um die Kugelrollspindel (3) gewundenen, von Kugelrillen (10, 11) der Kugelrollspindel (3) und der Spindelmutter (2) begrenzten Lastabschnitt (9) und einen dessen Anfang und Ende endlos verbindenden lastfreien Rückführungsabschnitt (12) aufweist, wobei eine an der Spindelmutter (2) drehfest angeordnete Nachschmiereinrichtung (15) unter Ausnutzung der Fliehkraft der rotierenden Spindelmutter (2) Schmierstoff an den Kugelkanal (8) abgibt, wobei die Nachschmiereinrichtung (15) ein Schmierstoffdepot (16) umfasst und einen den Kugelkanal (8) an das Schmierstoffdepot (16) anschließenden Übergabebereich (17), wobei das Schmierstoffdepot (16) zumindest im wesentlichen radial innerhalb des Übergabebereichs (17) ist, **dadurch gekennzeichnet, dass** das Schmierstoffdepot radial außerhalb der Kugelrollspindel (3)angeordnet ist.

2. Kugelgewindetrieb nach Anspruch 2, bei dem der Schmierstoff in einem porösen Stoff (18), beispielsweise Filz, gelagert ist.

3. Kugelgewindetrieb nach Anspruch 2, bei dem der Rückführungsabschnitt (12) den Übergabebereich (17) aufweist.

4. Kugelgewindetrieb nach Anspruch 1, bei dem eine Einrichtung zum Ausgleichen einer Unwucht vorgesehen ist.

5. Kugelgewindetrieb nach Anspruch 4, bei dem eine Mehrzahl von Schmierstoffdepots über den Umfang der Spindelmutter derart verteilt angeordnet sind, dass Unwuchten ausgeglichen sind.

6. Kugelgewindetrieb nach Anspruch 3, bei dem in eine Kassette (14) der Rückführungsabschnitt (12) und das Schmierstoffdepot (16) integriert sind, wobei eine den Rückführungsabschnitt (12) begrenzende Wand den Rückführungsabschnitt (12) von dem Schmierstoffdepot (16) trennt.

7. Kugelgewindetrieb nach Anspruch 6, bei dem die Spindelmutter (2) ein auf die Kugelrollspindel (3) aufgesetztes Mutterteil (13) aufweist, an dessen Innenumfang die Kugelrillen (10, 11) des Kugelkanals (8) ausgebildet sind, wobei die Kassette (14) an das Mutterteil (13) angeschlossen ist.

8. Kugelgewindetrieb nach Anspruch 7, bei dem diese Wand (20) den Übergabebereich (17) zum Schmierstoffdepot (16) aufweist.

9. Hilfskraftunterstützte Zahnstangenlenkung eines Kraftfahrzeuges, die mit einem Kugelgewindetrieb (1) nach Anspruch 1 versehen ist, wobei eine Zahnstange (4) der Zahnstangenlenkung in axialer Verlängerung die Kugelrollspindel (3) aufweist, und wobei die in einem Gehäuse drehbar gelagerte Spindelmutter (2) mit einem Antriebsritzel (5) für einen Zahnriemen versehen ist.

## Claims

1. Ball screw (1), with a ball-rolling spindle (3) and with a rotatably driven spindle nut (2) arranged thereon, balls (7) being arranged in an endlessly circulatable manner in at least one endless ball channel (8), which ball channel (8) has a load portion (9), wound around the ball-rolling spindle (3) and delimited by ball grooves (10, 11) of the ball-rolling spindle (3) and of the spindle nut (2), and a load-free return portion (12), endlessly connecting the start and end of the said load portion, a relubrication device (15) arranged fixedly into rotation on the spindle nut (2) discharging lubricant to the ball channel (8) by utilizing the centrifugal force from the rotating spindle nut (2), the relubrication device (15) comprising a lubricant repository (16) and the transfer region (17) connecting the ball channel (8) to the lubricant repository (16), the lubricant repository (16) being at least essentially radially within the transfer region (17), **characterized in that** the lubricant repository is arranged radially outside the ball-rolling spindle (3).

2. Ball screw according to Claim 1, in which the lubricant is stored in a porous substance (18), for example felt.

3. Ball screw according to Claim 2, in which the return portion (12) has the transfer region (17).

4. Ball screw according to Claim 1, in which the device for compensating an unbalance is provided.

5. Ball screw according to Claim 4, in which a plurality of lubricant repositories are arranged, distributed over the circumference of the spindle nut, in such a way that unbalances are compensated.

6. Ball screw according to Claim 3, in which the return portion (12) and the lubricant repository (16) are integrated into a cartridge (14), a wall which delimits the return portion (12) separating the return portion (12) from the lubricant repository (16).

7. Ball screw according to Claim 6, in which the spindle nut (2) has a nut part (13) which is placed onto the ball-rolling spindle (3) and on the inner circumference of which the ball grooves (10, 11) of the ball channel (8) are formed, the cartridge (14) being connected to the nut part (13).

8. Ball screw according to Claim 7, in which this wall (20) has the transfer region (17) to the lubricant repository (16).

9. Power-assisted rack-and-pinion steering of a motor vehicle, which is provided with a ball screw (1) according to Claim 1, a rack (4) of the rack-and-pinion steering having the ball-rolling spindle (3) in axial prolongation, and the spindle nut (2) mounted rotatably in a housing being provided with a drive pinion (5) for a toothed belt.

## Revendications

1. Vis d'entraînement à billes (1), comprenant une vis à bille (3) et un écrou de broche (2) entraîné en rotation et disposé sur celle-ci, des billes (7) étant disposées de manière à pouvoir circuler sans fin dans au moins un canal de billes sans fin (8), lequel canal de billes (8) présentant une portion de charge (9) enroulée autour de la vis à bille (3), limitée par des gorges de billes (10, 11) de la vis à bille (3) et de l'écrou de broche (2) et une portion de retour (12) sans charge reliant sans fin le début et le bout de la portion de charge, un dispositif de post-lubrification (15) disposé de manière solidaire en rotation sur l'écrou de broche (2) fournissant, par l'intermédiaire de la force centrifuge de l'écrou de broche (2) en rotation du lubrifiant au canal de billes (8), le dispositif de post-lubrification (15) comprenant un réservoir de lubrifiant (16) et une région de transfert (17) reliant le canal de billes (8) au réservoir de lubrifiant (16), le réservoir de lubrifiant (16) étant au moins disposé essentiellement radialement à l'intérieur de la région de transfert (17), **caractérisée en ce que** le réservoir de lubrifiant est disposé radialement à l'extérieur de la vis à billes (3).

2. Vis d'entraînement à billes selon la revendication 1, dans laquelle le lubrifiant est stocké dans une étoffe poreuse (18), par exemple un feutre.

3. Vis d'entraînement à billes selon la revendication 2, dans laquelle la portion de retour (12) présente la région de transfert (17).

4. Vis d'entraînement à billes selon la revendication 1, dans laquelle un dispositif est prévu pour compenser un déséquilibre.

5. Vis d'entraînement à billes selon la revendication 4, dans laquelle une pluralité de réservoirs de lubrifiant sont répartis sur la périphérie de l'écrou de broche de telle sorte que les déséquilibres soient compensés.

6. Vis d'entraînement à billes selon la revendication 3, dans laquelle la portion de retour (12) et le réservoir de lubrifiant (16) sont intégrés dans une enceinte (14), une paroi limitant la portion de retour (12) séparant la portion de retour (12) du réservoir de lubrifiant (16).

7. Vis d'entraînement à billes selon la revendication 6, dans laquelle l'écrou de broche (2) présente une partie d'écrou (13) posée sur la vis à billes (3), à la périphérie intérieure de laquelle sont réalisées les gorges de billes (10, 11) du canal de billes (8), l'enceinte (14) étant raccordée à la partie d'écrou (13).

8. Vis d'entraînement à billes selon la revendication 7, dans laquelle cette paroi (20) présente la région de transfert (17) au réservoir de lubrifiant (16).

9. Direction à crémaillère à servo-assistance d'un véhicule automobile, qui est pourvue d'une vis d'entraînement à billes (1) selon la revendication 1, une crémaillère (4) de la direction à crémaillère présentant, dans un prolongement axial, la vis à billes (3) et l'écrou de broche (2) monté à rotation dans un boîtier étant pourvu d'un pignon d'entraînement (5) pour une courroie dentée.
